# EUROPEAN PATENT APPLICATION

(11) **EP 0 995 704 A1**
(43) Date of publication of application: **26.04.2000**
(21) Application number: 99106320.7
(22) Date of filing: 26.03.1999
(51) Int. Cl.: B65G 61/00, B65G 57/24

(54) **Cargo-loading method and apparatus for loading cargoes in lines**

(30) Priority: 21.10.1998 JP 30018098
(71) Applicant: Fuji Yusoki Kogyo Co., Ltd., Onoda-shi, Yamaguchi (JP)
(72) Inventor: Katayama, Michihiko, Fuji Yusoki Kogyo Co., Ltd., Oaza Higashitakatomari, Onoda-shi (JP); Irie, Kazuhiro, Fuji Yusoki Kogyo Co., Ltd., Oaza Higashitakatomari, Onoda-shi (JP); Yata, Terutada, Fuji Yusoki Kogyo Co., Ltd., Oaza Higashitakatomari, Onoda-shi (JP)
(74) Representative: Hering, Hartmut, Dipl.-Ing.

(57) **Abstract**

Cargoes (40) are loaded on a pallet (21) in a plurality of lines per stage and in a plurality of stages by using a robot (10) with a chucking mechanism (11) installed in a vertically multi-articulate arm (12). The cargoes are fed to a front of the robot in each of those for one line and in a plurality of cargoes in a lump in a state of combining the cargoes so that those for one line can be almost the same in the breadth as to the direction of breadth perpendicular to an extending direction of the arm. The robot chucks the cargoes fed for one line, loads the cargoes treating those on the one end side on the pallet being on the front of the robot as those for a first line. Hereafter, the robot conducts the cargo-loading for the one stage by loading the cargoes from those for the first line to a last line, dislocating each of the cargoes for the one line to the direction separated from the first line. The robot loads the cargoes in a plurality of stages on the pallet by repeating the cargo-loading actions stated as above.

## Description

The present invention relates to a cargo-loading method and apparatus for loading cargoes in a plurality of lines and in a plurality of stages on pallets.

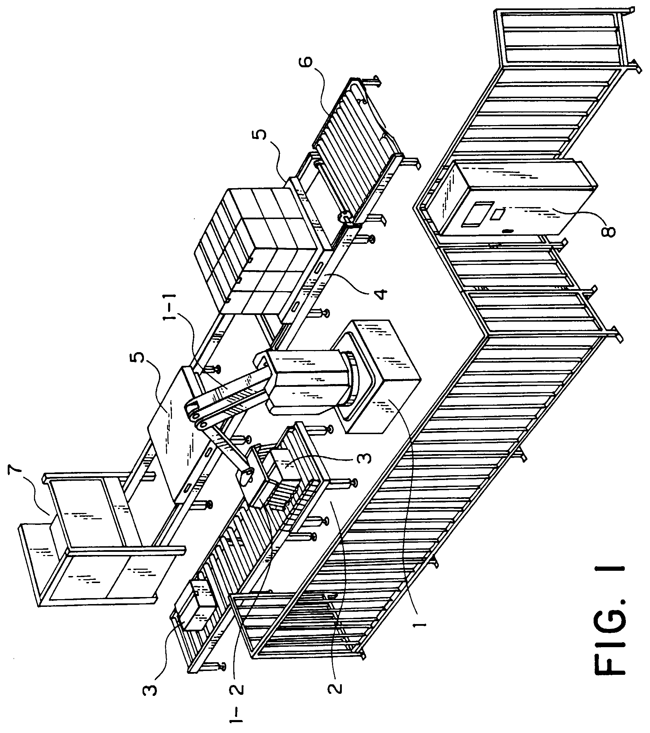

This type of cargo-loading apparatus mainly treats corrugated fiberboard boxes, resin board boxes, or bags containing articles as cargoes. This cargo-loading apparatus is used for the transportation and keeping of the cargoes inside and outside of the factories. It is called "palletizing apparatus". This palletizing apparatus has various types, but its usual type is equipped with a robot having a turning mechanism. Referring to Fig. 1, its example is described.

In Fig. 1, a robot 1 has an arm 1-1. In an end of the arm 1, a chucking mechanism 1-2 having a pair of rake-shaped claws is installed. The robot 1 chucks a cargo 3 transported on a feeding conveyor 2 with the chucking mechanism 1-2. Subsequently, the robot 1 turns, and puts the cargo 3 on a pallet 5 being on a cargo-loading conveyor 4, and then releases the cargo 3. In this method of loading the cargoes, a plurality of cargoes are loaded on the pallet 5 in a stopping state so as to form a first stage. In that place, six (6) pieces of cargoes 3 are put in the order per stage. Next, the robot 1 loads the six (6) pieces of cargoes 3 in a second stage upon the cargoes 3 in the first stage in the order. The above actions are repeated until the cargoes 3 are loaded in a predetermined number of stages. Such method of loading cargoes is called "plane cargo-loading method".

Once loading the cargoes 3 in the predetermined number of stages is finished, the robot 1 is in a standby state. Whereas, the pallet 5 with the cargo loading completed is fed to a discharge conveyor 6. Subsequently, the next pallet 5 is fed from a pallet supplying apparatus 7 to the cargo-loading conveyor 4. The above-mentioned control is carried out by a controller stored in a control board 8.

Incidentally, in Fig. 1, the six (6) pieces of cargoes 3 are loaded per stage on the pallet 5. Then, a cargo loading plane pattern formed with the six (6) pieces of cargoes viewing from the above is the same in all the stages. However, there are various patterns in the cargo-loading plane patterns as described later. For corresponding to such patterns, the robot 1 is equipped with a rotating mechanism for rotating the chucking mechanism 1-2. By using this rotating mechanism, the cargoes 3 can be loaded at a changed angle (for example, 90°) against the cargoes 3 already loaded on the pallet 5.

In any event, it is necessary for the conventional palletizing apparatus to install the turning mechanism and the rotating mechanism of a chucking mechanism 1-2 in the robot 1. Also, the cargo-loading positions for the cargoes 3 are determined by using the turning mechanism and the rotating mechanism of the chucking mechanism in the robot 1. For this reason, the constitution and control of the robot 1 become complicated, necessitating a lot of information regarding the cargo-loading positions, and causing the instructions of the cargo-loading positions to be more complicated.

The instructions of cargo-loading positions are as below. Once the method of loading the cargoes is determined, an operator previously operates the robot 1 manually and makes the robot 1 memorize the positions of chucking and loading The cargoes 3. For this reason, the controller is equipped with a memory.

In addition, in the above palletizing apparatus, it is necessary to load the cargoes one by one or with a plurality of cargoes simultaneously in the different positions on the pallet 5. In this case, because there are the feeding conveyor 2 and the cargo-loading conveyor 4 in the positions somewhat apart from each other, it needs much time for loading a piece of cargo.

It is an object of the present invention to provide a cargo-loading method and apparatus which can load cargoes in a plurality of stages with various cargo-loading plane patterns by using a robot having no turning mechanism nor rotating mechanism of chucking mechanism.

It is another object of the present invention to provide a cargo-loading method and apparatus which can fully utilize its cargo-loading capacity by lessening redundant movements of the robot as much as practical.

A cargo-loading method according to the present invention is for loading cargoes on a pallet in a plurality of lines per stage and in a plurality of stages by using a robot with a chucking mechanism installed in a vertically multi-articulate arm.

According to an aspect of the present invention the method comprises the steps of a pallet feeding step for feeding the pallet to the front of the robot and a cargo feeding step for feeding a plurality of cargoes in a lump to the front of the robot in a state of combining the cargoes per those of one line and so that the cargoes per line can be equal in the breadth as to the cross direction perpendicular to an extending direction of the arm. The method further comprises a cargo loading step for carrying out chucking the cargoes for the one line fed by the cargo feeding step, loading the cargoes treating the one end side on the pallet being in the front of the robot as a first line, thereafter carrying out loading operations for the cargoes in a first stage by loading the cargoes from the first line to a last line, dislocating the cargo-loading positions per those in one line to the direction separating from the first line, thereafter loading the cargoes in a plurality of stages on the pallet, and repeating the above cargo-loading operations in the same way.

A cargo-loading apparatus according to the present invention comprises a robot having a chucking mechanism installed in a vertically multi-articulate arm, whereby the cargoes are loaded on a pallet in a plurality of lines per stage, and in a plurality of stages. The cargo-loading apparatus further comprises a cargo-loading conveyor for transporting it to a predetermined direction and for feeding the pallet to the front of the robot, a cargo supplying section for feeding a plurality of cargoes in a lump to the front of the robot in a state of combining the cargoes per those of one line and so that the cargoes per line can be equal in the breadth as to the cross direction perpendicular to an extending direction of the arm, and a controller for controlling the robot, cargo-loading conveyor and the cargo supplying section. The robot chucks the cargoes fed by the cargo supplying section per those in one line, and loads the cargoes treating the one end side on the pallet being in the front of the robot as a first line. Hereafter, the robot conducts loading operations for the cargoes in a first stage by loading the cargoes from the first line to a last line, dislocating the cargo-loading positions per those in one line to the direction separating from the first line. The robot loads the cargoes in a plurality of stages on the pallet, repeating the above cargo-loading operations in the same way.

### BRIEF DESCRIPTION OF THE DRAWINGS

Fig. 1 is a perspective view showing a conventional cargo-loading apparatus;
Fig. 2 is a plane view showing a constitution of a cargo-loading apparatus according to a first embodiment of the present invention;
Fig. 3 is a side view showing the cargo-loading apparatus shown in Fig. 2;
Figs. 4A through 4D are views showing cargo-loading operations of the cargo-loading apparatus shown in Fig. 2;
Figs. 5A through 5C are views showing a preferred embodiment of a state of cargo-loading for the cargoes to be loaded by the apparatus according to the present invention;
Fig. 6 is a plane view showing a constitution of the cargo-loading apparatus according to a second embodiment of the present invention;
Fig. 7 is a side view showing the cargo-loading apparatus shown in Fig. 6;
Fig. 8 is a view showing an example of a chucking mechanism according to the present invention;
Fig. 9 is a perspective view showing an example in a case of the chucking mechanism shown in Fig. 8;
Fig. 10 is a view showing another example of the chucking mechanism according to the present invention;
Fig. 11 is a view showing another example of the chucking mechanism shown in Fig. 8, viewing from the same direction as that of Fig. 8; and
Fig. 12 is a perspective view showing a principal part of the chucking mechanism shown in Fig. 8.

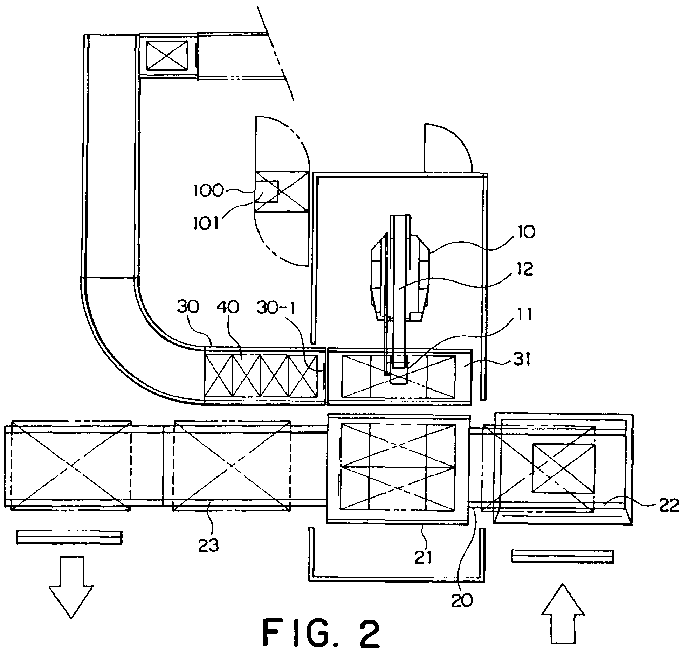

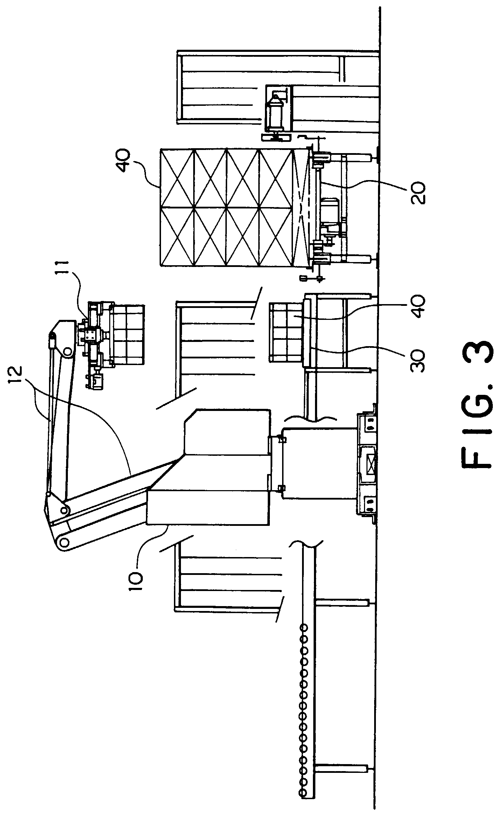

Referring to Figs. 2 and 3, a cargo-loading apparatus according to a first embodiment of the present invention is described. The cargo-loading apparatus according to this embodiment of the present invention comprises a robot 10 with an arm 12 having a chucking mechanism 11 on its end, a cargo-loading conveyor 20, a cargo feeding conveyor 30 for conveying cargoes 40 to the front of the robot 10. The cargo-loading apparatus further comprises a cargo arranging apparatus 31 for lining the cargoes 40 fed by the cargo feeding conveyor 30 for one line and arranging them in chucking locations according to the chucking mechanism 11, i.e. the front of the robot 10. In this embodiment, it is a precondition that the cargoes 40 are the same in dimension.

The robot 10 is of a biaxial type, not rotating type. Such robot 10 enables the chucking mechanism 11 to move to an extending direction of the arm 12 and vertical upward and downward directions, and is called a vertically multi-articulate robot. That is to say, the robot 10 has no such turning mechanism and rotating mechanism of the chucking mechanism 11 like conventional robots. Particularly, the chucking mechanism 11 is able to chuck a plurality of cargoes 40 (4 pieces, in this case) arranged in one line in a lump, its function is described later.

The cargo conveyor 20 is equipped for transporting a pallet 21 with cargoes to be loaded to the front of the robot 10. On the one end side (the right side in Fig. 2) of the cargo conveyor 20, an empty pallet supplying apparatus 22 is arranged for supplying the empty pallet to the cargo conveyor 20. On the other end side (the left side in Fig. 2) of the cargo conveyor 20, a receiving conveyor 23 is arranged for receiving the pallet with the cargoes 40 loaded. The empty pallet supplying apparatus 22 and the receiving conveyor 23 are well known, so their detailed description is eliminated.

The cargo feeding conveyor 30 is equipped for laying a plurality of cargoes 40 (4 pieces in this case) to be next chucked in a standby position in a state of arranging them in one line. On the end side of the cargo feeding conveyor 30, a movable stopper 30-1 is equipped for stopping four (4) pieces of the cargoes to be chucked next. This movable stopper 30-1 is driven so as to move downward when the four (4) pieces of cargoes 40 are chucked by the chucking mechanism 11 and are moved upward. As its result, the four (4) pieces of cargoes 40 are immediately transferred onto the cargo arranging apparatus 31. The cargo feeding conveyor 30 and the cargo arranging apparatus 31 serve as a cargo arranging section. Particularly, in this embodiment, from the viewpoint of minimizing the distance of movements of the chucking mechanism 11 arising from the loading the cargoes 40, the cargo arranging apparatus 31 is arranged between the robot 10 and the cargo- loading conveyor 20. Because of this, the cargo feeding conveyor 30 is extended with at least its part being parallel to the cargo-loading conveyor 20. Also, it is desirable that the cargo arranging apparatus 31 is in a position higher than the height of the pallet 21 on the cargo-loading conveyor 20. However, the cargo arranging apparatus 31 may be in front of the robot 10, its position and height are not limited to those of this embodiment.

By constituting as above, the cargoes 40 are fed to the front of the robot 10 in each of the one line, i.e. four (4) pieces in a lump in a state of combining the cargoes so that the breadth of those for the one line can be almost the same as to the direction of breadth rectangular against an extending direction of the arm 12 (in a horizontal state).

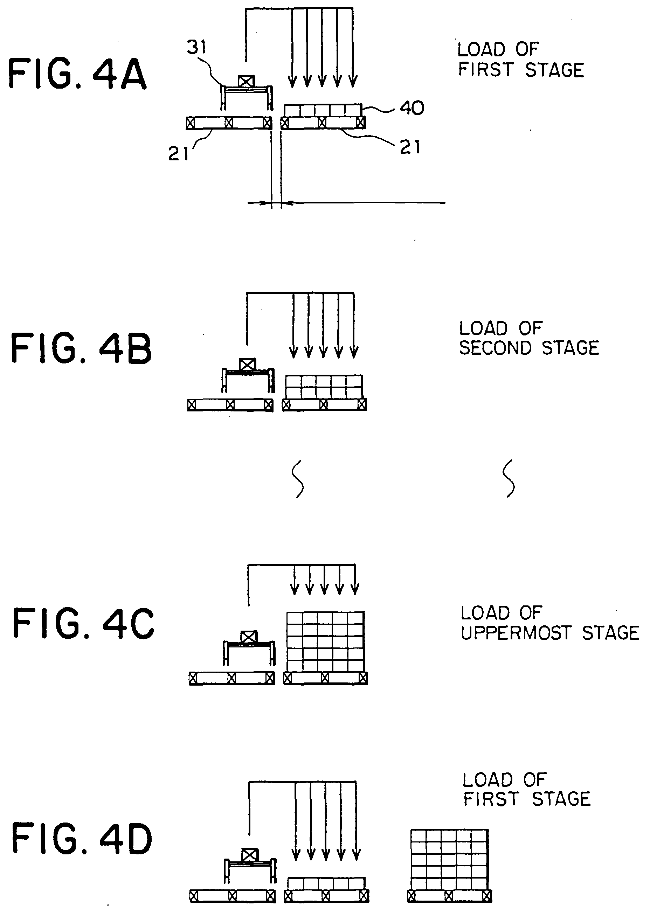

The above actions of constituting elements are automatically controlled by a controller 101 in a controlling board 100 (Fig. 2). This automatic control actions are described, referring to Figs. 4A through 4D. In addition, Figs. 4A through 4D do not illustrate the robot.

As illustrated in Fig. 4A, the robot 10 (Fig. 2) chucks the four (4) pieces of cargoes 40 arranged on the cargo arranging apparatus 31 for the one line in a lump with the chucking mechanism 11. Subsequently, The robot 10 conducts loading the cargoes, treating those on the one end side farthest from the robot 10 and on the pallet 21 (a first pallet) in front of the robot 10 installed in the cargo-loading conveyor 20 as those for a first line. Hereafter, the robot 10 loads the cargoes, dislocating cargo loading positions in each of one line to the direction separating from the first line until loading those for a last line (a fifth (5) line in this case). In this case, the robot 10 loads the cargoes in the first stage in a way of plane loading. The robot 10 also loads the cargoes for a second stage on the pallet 21 similarly to the above (Fig. 4B). The robot 10 loads the cargoes on an uppermost stage (a fifth stage in this case) by repeating the above actions (Fig. 4C). During these actions, the cargo-loading conveyor 20 is in a stopping state.

Next, the controller 101 drives the cargo-loading conveyor 20 and moves the pallet 21 with the cargo-loading completed to the receiving conveyor 23, also moves the empty pallet 21 (a second pallet) in a standby state to the position in front of the robot 10. These movements are conducted while the chucking mechanism 11 is coming back for picking up next cargoes. On this empty pallet 21 the cargoes are loaded in a plurality of stages in the way similar to the above (Fig. 4D).

The above-mentioned actions can be automatically controlled by previously teaching with an operator and making the controller 101 memorize the positions of chucking and loading the cargoes.

As it is obvious from the above description, since the robot 10 has no turning mechanism, nor the rotating mechanism of chucking mechanism 11, its constitution is simple, necessitating less information regarding the cargo-loading positions. In addition, transferring the cargoes 40 from the cargo arranging apparatus 31 to the pallet 21 on the cargo-loading conveyor 20 in a shortest distance of only extending direction of the arm 12 and the upward and downward directions without turning action or rotating action of chucking mechanism 11. Moreover, the robot 10 is not in a standby state while transferring the cargoes, so time spending can be saved. As its result, the cargo-loading apparatus according to the present invention can maximize its cargo-loading capacity.

In addition, for better understanding, Figs. 4A through 4D show the case that the relations of positions of the cargo arranging apparatus 31, the pallet 21 being in the position of cargo-loading and the empty pallet 21 being in the standby position are different from those in Fig. 2. That is to say, according to the constitution of Fig. 2, the empty pallet 21 being in the standby position arranges to the direction vertical to the drawing, against the pallet 21 being in the cargo-loading position. However, the cargo-loading conveyor 20 may be extended to the same direction with the moving direction of chucking mechanism 11 passing just under the robot 10 and the cargo arranging apparatus 31. Figs. 4A through 4D are illustrated considering the above constitutions.

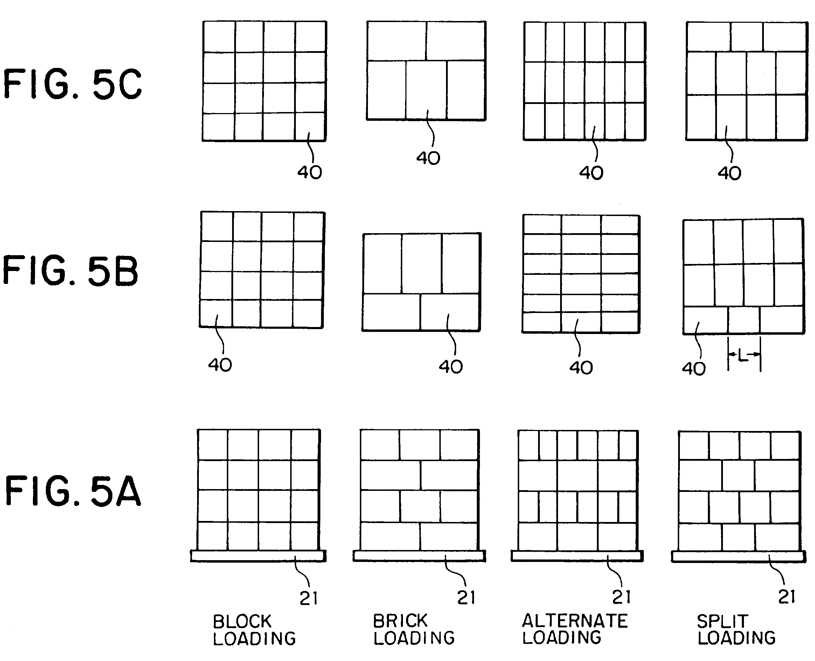

As stated above, in the first embodiment, the four (4) pieces of cargoes 40 constituting one line are fed to the front of the robot 10 always in the state of the same combination pattern (hereinafter called "combination pattern") viewing from the above. Whereby, in each of a plurality of stages the cargoes are loaded so that the cargo-loading plane patterns viewing from the above (hereinafter called "cargo-loading plane pattern") can be the same in each stage. Such cargo-loading is called "block loading" shown in Fig. 5A as a side view, and shown in each of Fig. 5B and Fig. 5C as cargo-loading plane patterns of the first stage and the second stage, respectively. Moreover, in Fig. 5B and Fig. 5C, the lowest side is the first line, and therefrom upward, being the second line and the third line. Also, the block loading shown in the figures is in the case of applying to the cargoes of cubic shape, but needless to say, it can be applied to the cargoes of rectangular shape.

The cargo-loading plane pattern varies depending on typical cargo-loading shapes shown in Figs. 5A through 5C. These patterns are described hereunder, on the precondition that the face along the longitudinal direction of rectangular cargoes 40 is called as a side face, and the face perpendicular to the longitudinal direction of the rectangular cargoes 40 is called as an end face.

In case of brick loading, in the first line of the first stage, two (2) pieces of cargoes 40 are loaded so that the axis of longitudinal direction can be perpendicular to the extending direction of the arm 12 (Fig. 2), i.e. both the end faces are put facing each other. In the second line of the first stage, three (3) pieces of cargoes 40 are put so that the axis of the longitudinal direction can be parallel with the extending direction of the arm 12, facing the side faces each other. As its result, the combination pattern of two (2) pieces of cargoes 40 constituting the first line is different from the combination pattern of three (3) pieces of cargoes 40 constituting the second line. However, the sizes of directions of breadth rectangular to the extending direction of the arm 12 of the combination patterns of the cargoes in the first line and the second line are the same. Next, in the first line of the second stage, three (3) pieces of cargoes 40 are loaded so that the axis of the longitudinal direction can be parallel with the extending direction of the arm 12, facing the side faces each other. In the second line of the second stage, two (2) pieces of cargoes 40 are loaded keeping so that the axis of the longitudinal direction can be perpendicular to the extending direction of the arm 12, facing the end faces each other. The odd stages and the even stages have the same cargo-loading plane pattern, respectively. Moreover, the cargo-loading pattern of even stages seemingly becomes the pattern rotated at 180° against the cargo-loading pattern of the odd stages.

In case of alternate loading, in all the lines (six (6) lines) of the first stage, three (3) pieces of cargoes 40 are loaded so that the axis of the longitudinal direction can be perpendicular to the extending direction of the arm 12, facing the end faces each other. In all the lines (three (3) lines) of the second stage, six (6) pieces of cargoes 40 are loaded so that the axis of the longitudinal direction can be parallel with the extending direction of the arm 12, facing the side faces each other. In any of the first and the second stages, the sizes of the direction of breadth perpendicular to the extending direction of the arm 12 are the same. The odd stages and the even stages have the same cargo-loading plane pattern, respectively. Moreover, the cargo-loading plane pattern of the even stages seemingly becomes the pattern rotated at 90° against the cargo-loading plane pattern of the odd stages.

In case of split loading, in the first line of the first stage, two (2) pieces of cargoes 40 are loaded to the effect that its longitudinal direction axis is perpendicular to the extending direction of the arm 12, and in the combination pattern arranged with the distance L between both the side faces. In each of the second and the third lines of the first stage, four (4) pieces of cargoes 40 are loaded to the effect that its axis of longitudinal direction is parallel with the extending direction of the arm 12, facing the side faces each other. As its result, the combination pattern of the two (2) pieces of cargoes 40 constituting the first line is different from the combination patterns of four (4) pieces of cargoes 40 constituting the second and the third lines. However, in any of the above lines, the sizes of the direction of breadth perpendicular to the extending direction of the arm 12 are the same. In the second stage, its cargo-loading plane pattern seemingly becomes the pattern rotated at 180 against the cargo-loading plane pattern of the first stage. The odd stages and the even stages have the same cargo-loading plane pattern, respectively.

Further, Figs. 5A through 5C show typical cargo-loading shapes, but the cargo-loading apparatus according to the present invention is not limited to such cargo-loading shapes. That is to say, in the apparatus according to the present invention, whatever the combination pattern of a plurality of the cargoes constituting each line per stage is, the pattern to the effect that the sizes of the direction of breadth perpendicular to the extending direction of the arm 12 are the same, such pattern is applicable.

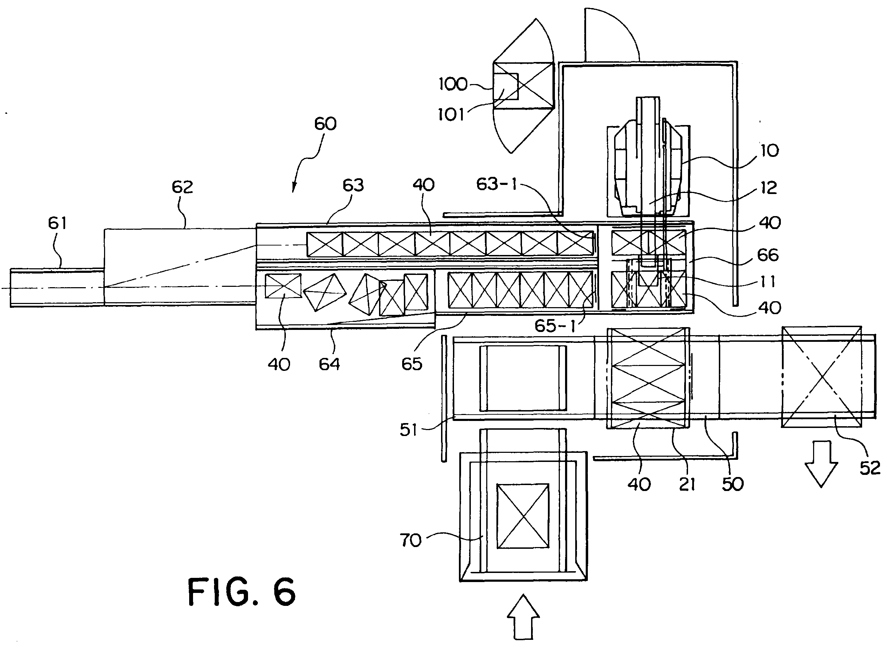

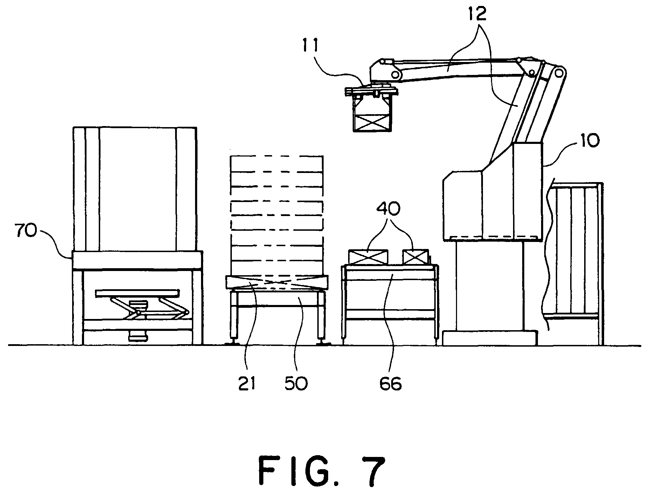

Referring to Fig. 6 and Fig. 7, the cargo-loading apparatus according to a second embodiment of the present invention is appropriate for the brick loading, the alternate loading, and the split loading as shown in Figs. 5A through 5C are described. The apparatus according to this second embodiment is different from the apparatus according to the first embodiment, as described in Figs. 5A through 5C, in the point to the effect that the apparatus according to the second embodiment has a cargo arrangement section 60 for supplying the combination pattern of a plurality of cargoes constituting one line in the state different from that of the first embodiment.

This cargo-loading apparatus comprises the robot 10 same as that described in the first embodiment of the present invention, a cargo-loading conveyor 50 for transporting the pallet 21 to the one direction, and the cargo arrangement section 60 for transporting the cargoes 40 to the front of the robot 10. In this embodiment, it is a precondition that the sizes of the cargoes 40 are the same in each other.

On the one end side (the left side in Fig. 6) of the cargo-loading conveyor 50, an empty pallet supplying apparatus 70 for supplying an empty pallet into the cargo-loading conveyor 50, and an empty pallet loading/transfer apparatus 51 are arranged. On the other end side (the right side in Fig. 6) of the cargo-loading conveyor 50, a receiving conveyor 52 for receiving a pallet with the cargoes loaded is arranged.

The cargo arrangement section 60 comprises a cargo introducing conveyor 61 for introducing the cargoes 40, and a cargo distributing apparatus 62 for distributing the cargoes 40 into the two (2) directions. The cargo arrangement section 60 further comprises a first cargo feeding conveyor 63, a direction converting apparatus 64, and a cargo arranging apparatus 66. The first cargo feeding conveyor 63 is equipped for feeding the cargoes 40 on the one side distributed so that the first combination pattern can be obtained. The direction converting apparatus 64 is equipped for converting the direction of the cargoes 40 on the other side distributed. A second cargo feeding conveyor 65 is equipped for feeding the cargoes 40 with the direction converted so that the second combination pattern can be acquired. The cargo arranging apparatus 66 is equipped for lining and arranging the cargoes 40 fed by the first and the second cargo feeding conveyors 63 and 65 in each of those for the one line in first and second chucking positions with the chucking mechanism 11 of the robot 10.

In Fig. 6, the first combination pattern is a pattern facing both the end faces each other so that the two (2) pieces of cargoes with the axis of the longitudinal direction can be perpendicular to the extending direction of the arm 12. Whereas, the second combination pattern is a pattern facing both the side faces each other so that the three (3) pieces of cargoes 40 with the axis of longitudinal direction can be parallel with the extending direction of the arm 12. On the end side of the first and the second cargo feeding conveyor 63 and 65, movable stoppers 63-1 and 65-1 are equipped for stopping two (2) or three (3) pieces of cargoes 40 to be chucked next. These movable stoppers 63-1 and 65-1 are the same as the movable stopper 30-1 illustrated in Fig. 2.

With the above constitution, the cargoes 40 are arranged on the cargo arranging apparatus 66 in a lump for those of one line, i.e. each two (2) pieces as to the first chucking position, each three (3) pieces as to the second chucking position, and in the combination state so that the cargoes for the one line can be perpendicular to the extending direction of the arm 12 and the sizes of breadth can be almost the same in breadth.

Moreover, since the cargo distributing apparatus 62, the direction converting apparatus 64, the first and the second cargo feeding conveyors 63 and 65 in the above cargo arrangement section 60 are well known in each single apparatus, their detailed description is eliminated.

The controller 101 controls the vertically multi-articulate robot 10 based on the first and the second chucking positions previously obtained by teaching, and the information on the cargo-loading position for the cargoes 40. As illustrated in Figs. 4A through 4D, stating on the first stage, the robot 10 chucks the two (2) pieces of cargoes 40, in a lump, of the first combination pattern fed by the cargo arranging section 60 to the first chucking position, and then loads these cargoes in the first line on the pallet 21. Next, the robot 10 chucks the three (3) pieces of cargoes 40, in a lump, of the second combination pattern fed to the second chucking position, and then loads these cargoes in the second line on the pallet 21. The robot 10 subsequently chucks the three (3) pieces of cargoes 40, in a lump, of the second combination pattern fed to the second chucking position, and then loads these cargoes in the third line on the pallet 21.

In the second stage, the robot 10 chucks the three (3) pieces of cargoes 40 of the second combination pattern fed to the second chucking position, and then loads these cargoes in the first line on the pallet 21. Similarly, the three (3) pieces of cargoes 40 of the second combination pattern are loaded in the second line on the pallet 21. Subsequently, the robot 10 chucks the two (2) pieces of cargoes 40 of the first combination pattern fed to the first chucking position, and then loads these cargoes in the third line on the pallet 21. Hereafter, similarly to the above, the robots 10 loads the cargoes so that the odd stages and the even stages can be the same cargo-loading plane pattern, respectively. As its result, the cargo-loading shape similar to the brick loading (but, 3 lines) can be obtained as described in Figs. 5A through 5C.

The case of alternate loading as shown in Figs. 5A through 5C is briefly described. For example, the three (3) pieces of cargoes 40 with their axis of the longitudinal direction being perpendicular to the extending direction of the arm 12, facing the end faces each other, are deemed to be the first combination pattern. Whereas, the six (6) pieces of cargoes 40 with their axis of the longitudinal direction being parallel with the extending direction of the arm 12, facing the side faces each other, are deemed to be the second combination pattern. The robot 10 loads cargoes to the effect, as to the first stage, that the cargoes in all the six (6) lines can be the cargo-loading plane pattern consisting of the first combination pattern. Next, the robot 10 loads cargoes to the effect, as to the second stage, that the cargoes in all the three (3) lines can be the cargo-loading pattern consisting of the second combination pattern. Hereinafter, the robot 10 repeats the cargo-loading mentioned as above to the predetermined stages.

The case of split loading as shown in Figs. 5A through 5C is briefly described. For example, the two (2) pieces of cargoes 40 with their axis of the longitudinal direction being perpendicular to the extending direction of the arm 12, and arranged with the distance L between both the end faces, are deemed to be the first combination pattern. Whereas, the four (4) pieces of cargoes 40 with their axis of the longitudinal direction being parallel with the extending direction of the arm 12, facing the side faces each other, are deemed to be the second combination pattern. In this case, in the first chucking position of the cargo arranging apparatus 66, two (2) pieces of cargoes 40 are arranged in the state of the distance L between both the end faces. The robot 10 loads cargoes in the state of the first combination pattern in the first line of the first stage, and in the state of the second combination pattern in the second and the third lines. In the second stage, the robot 10 loads cargoes in the state of the second combination pattern in the first and the second lines, and in the third line, in the state of the first combination pattern. Hereinafter, the robot 10 repeats the cargo-loading mentioned as above to the predetermined stages.

In this second embodiment according to the present invention, the necessary information regarding the cargo-loading positions, particularly on the chucking positions, is increasing, but compared with the information on the conventional apparatus, its quantity is smaller. Also, the robot 10 can transfer the cargoes 40 from the cargo arranging apparatus 66 to the pallet 21 on the cargo-loading conveyor 50 without turning actions of the arm 12 and rotating actions of chucking mechanism in the shortest distance to the extending direction and upward and downward direction of the arm 12 only. In addition, the robot 10 is in no standby condition during the transfer of the pallet, which saves the time and maximizes the cargo-loading capacity.

In the second embodiment according to the present invention, two (2) types of combination patterns are made and supplied to the two (2) chucking positions by using the two (2) cargo feeding conveyors 63 and 65. However, as to what type of the combination pattern is made, it can be optionally set up by appropriately selecting the operation modes of the cargo-loading feeding conveyors 63 and 65. And, with the one cargo feeding conveyor the cargoes of various combination patterns can be supplied to the one chucking position. For example, the outlet of the direction converting apparatus 64 is joined to the cargo feeding conveyor 63 at its intermediate. Or, the cargoes are introduced at the time of supplying the cargoes to the cargo introducing conveyor 61 in the state of the direction of cargoes converted. Whereby, the cargoes of various combination patterns can be supplied to the one chucking position.

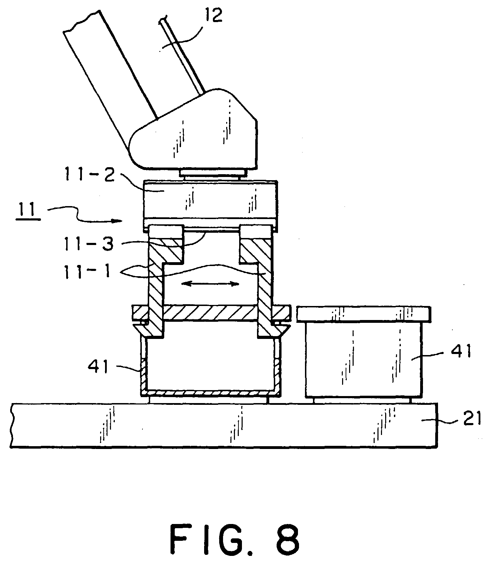

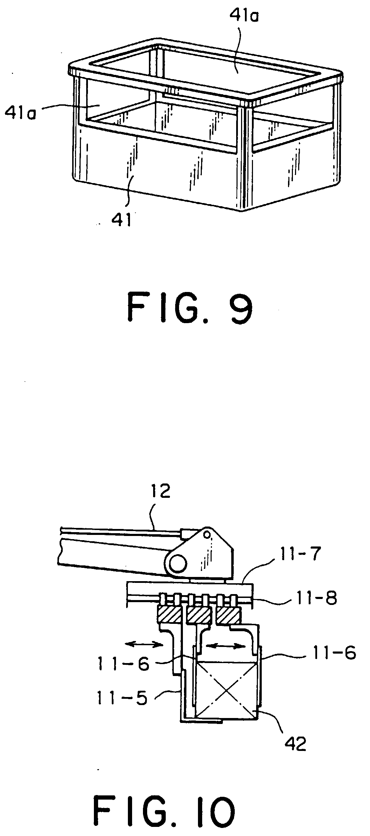

Next, referring to Fig. 8 and Fig. 9, an example of the chucking mechanism 11 is illustrated. Fig. 9 shows the case that the cargoes 40 includes a resin case 41 of simplified box type like beer cases. The case 41 has an opening 41a adjacent to the upper edge section of two (2) edges facing each other.

In case of dealing with such case 41, the chucking mechanism 11 of the robot 10 consists of a mechanism having a pair of rake-shaped claws 11-1 capable to approach and separate each other, to insert through openings 41a facing each other, as illustrated in Fig. 8. Particularly, the rake-shaped claws 11-1 have claws projecting outward. These claws can insert into the inside of the case 41. It is desirable for the mechanism to constitute to the effect that the claws can insert into the inside of opening 41a by moving parallel outward a bit. As illustrated in the figure, this is because when the cases in the second line are loaded, they can be loaded close to the case 41 already loaded in the first line as closer as possible. In other words, it is because when the case 41 are released from the chucking mechanism 11, the movement of claws 11-1 cannot be avoided by the case 41 in the first line already loaded.

Describing in detail, a pair of claws 11-1 are attached to a rod 11-3 spanned to a head 11-2 of the chucking mechanism 11 so as to approach and separate from each other. The rod 11-3 serves as a guide of the pair of claws 11-1. As a driving unit for moving a pair of claws, well-known air cylinder mechanism, a timing belt, or a ball thread, etc. can be utilized. The timing belt or the ball thread are combined with a servo motor. In any case, the pair of claws 11-1 are driven, when the chucking mechanism 11 chucks the case 41, so that the pair of claws 11-1 are approaching each other. Next, the entire chucking mechanism 11 is moved downward, and the pair of claws 11-1 are inserted into the case 41. Subsequently, the pair of claws 11-1 are spanned over the upper edge of the case 41 by driving both to the directions separable each other. When the case 41 is released, the pair of claws 11-1 are moved to the direction of approaching to each other, and then the pair of claws 11-1 are separated from the upper edge of the case 41, the entire chucking mechanism 11 is moved upward. The above driving is controlled by the abovementioned controller 101. Moreover, in order for the claws 11-1 to smoothly move along the rod 11-3, it is desirable that the claws 11-1 are supported on the rod 11-3 through a bearing rotatably by axis.

Fig. 10 shows an example of the chucking mechanism 11 in case that the cargo 40 includes box-shaped cases 42 like corrugated fibreboard boxes or cartons. The case 42 is different from the case 41 shown in Fig. 9, and has no openings. In this case, the chucking mechanism 11 has a movable simplified-L-shaped rake type claws 11-5 whereby the claws 11-5 can be moved under the case 42. The chucking mechanism 11 also has a pair of movable chuck plates 11-6 which can chuck the case 42 from both the sides in order to prevent the case 42 from its vibration. The claws 11-5 and the pair of chuck plates 11-6 are attached to a rod 11-8 spanned over a head 11-7 of the chucking mechanism 11 so as to approach and separate from each other. The rod 11-8 serves as a guide of the claws 11-5 and the pair of chuck plates 11-6. As a moving mechanism, similarly to those shown in Fig. 8, well-known air cylinder mechanism, the timing belt, or the ball thread, etc. can be utilized. Also, the installation structure of the claws 11-5 and the pair of chuck plates 11-6 to the rod 11-8 may be the same as those shown in Fig. 8.

When the case 42 is chucked, the claws 11-5 are in the position of left side in the figure. Whereas, the pair of chuck plates 11-6 are in the position with a space of a little bit larger distance than the breadth of the case 42. When the chucking mechanism 11 is moved downward to the chucking position, the claws 11-5 are moved rightward and come down under the case 42. At the same time, the pair of chuck plates 11-6 are moved to the direction of approaching each other and chuck the case 42. As its result, the case 42 is loaded on the claws 11-5, and the vibration arising from the moving of the pair of chuck plates 11-6 is prevented. The pair of chuck plates 11-6 are favorable if the vibration of the case 42 can be prevented, and it's not so needed to enlarge its chucking capability.

When the case 42 is released from the claws 11-5, the claws 11-5 are moved leftward and separate the case 42 from the under part. Thereafter, the pair of chuck plates 11-6 are separated from the case 42 keeping the space distance of the chucking state by the upward movement of the entire chucking mechanism 11. Of course, the above driving is controlled by the controller 101.

Further, Fig. 8 and Fig. 10 describe on the case 41 or the case 42 in case of one piece. According to the present invention, two (2) cases or more are chucked and moved in a lump. For this reason, stating in the case of Fig. 8, a plurality of the pair of rake-shaped claws may be installed in the head 11-2 of chucking mechanism 11. Or a plurality of the pair of rake-shaped claws 11-1 may be individually installed in the head 11-2 in the removable state as a structure. This is because that the number of pieces chucked in a lump is not always the same. Also, since the size of the case is not definite, the rake-shaped claws 11-1 according to the size of the case are prepared. The above ways are the same in case of those shown in Fig. 10.

The chucking mechanism 11 shown in Fig. 8 and Fig. 10 is an example only, but the other well-known chucking mechanism used for conventional palletizing apparatus may be used.

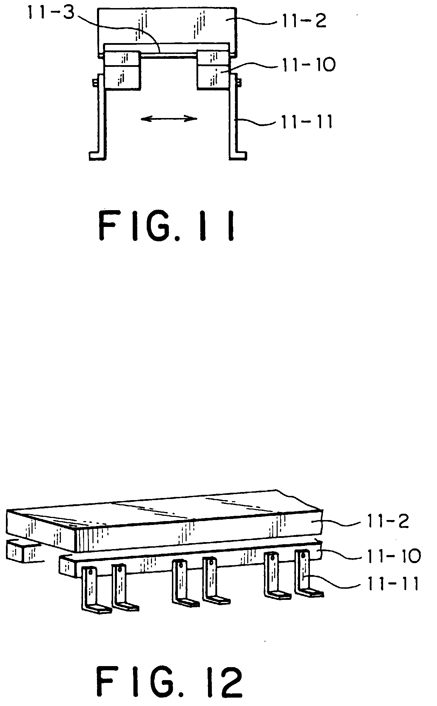

Fig. 11 and Fig. 12 show an example of the rake-shaped claws which are individually removable. In Figs. 11 and 12, claws 11-11 are individually attached to a pair of rake fixing bars 11-10 by using bolts or the like. The pair of rake fixing bars 11-10 are supported by at least one of rod 11-3 so as to approach and separate from each other.

Further, in any of the second embodiment according to the present invention, the cargoes are loaded so that the first line of each stage on the pallet 21 can be nearest to the end farthest from the robot 10. However, it may also be favorable to load the cargoes so that the first line can be nearest to the robot 10, and the second and the third lines can be next nearest to the robot 10 in that order.

Also, it is described on the so-called palletizing apparatus for loading cargoes in a plurality of lines and in a plurality of stages on the pallet. However, by the adverse actions against the above action with the robot 10, the so-called depalletizing apparatus for dismantling the cargoes already loaded on the pallet in a plurality of line and in a plurality of stages in each of those in the one line, and for transferring those to any other pallet or conveyor may be utilizable.

As abovementioned, because the robot according to the present invention has no turning mechanism, rotating mechanism of chucking mechanism, its constitution is simple, the quantity of the information on the cargo-loading positions may be small. Also, the robot can transfer the cargoes without turning action, or rotating action of chucking mechanism of the arm in a shortest distance to the extending direction and the upward and downward directions only. In addition, because the robot is in no case in a standby condition during the transfer of cargoes to any other pallet, the time can be saved, and the cargo-loading capacity can be fully achieved.

## Claims

1. A cargo-loading method for loading cargoes (40) on a pallet (21) in a plurality of lines per stage and in a plurality of stages by using a robot (10) with a chucking mechanism (11) installed in a vertically multi-articulate arm (12), said method comprising the steps of;
a pallet feeding step for feeding said pallet to the front of said robot;
a cargo feeding step for feeding a plurality of cargoes in a lump to the front of said robot in a state of combining the cargoes per those of one line and so that the cargoes per line can be equal in the breadth as to the cross direction perpendicular to an extending direction of said arm; and
a cargo loading step for carrying out chucking said cargoes for the one line fed by said cargo feeding step, loading said cargoes treating the one end side on said pallet being in the front of said robot as a first line, thereafter carrying out loading operations for said cargoes in a first stage by loading said cargoes from said first line to a last line, dislocating the cargo-loading positions per those in one line to the direction separating from said first line, thereafter loading said cargoes in a plurality of stages on said pallet, and repeating the above cargo-loading operations in the same way.

2. A cargo-loading apparatus for loading cargoes (40) on a pallet (21) in a plurality of lines per stage and in a plurality of stages and comprising:
a robot (10) with a chucking mechanism (11) installed in a vertically multi-articulate arm (12);
a cargo-loading conveyor (20) for transporting said pallet on it to a predetermined direction and for feeding said pallet to the front of said robot;
cargo supplying means (30) for feeding a plurality of cargoes in a lump to the front of said robot in a state of combining the cargoes per those of one line and so that the cargoes per line can be equal in the breadth as to the cross direction perpendicular to an extending direction of said arm; and
a controller (101) for controlling said robot, said cargo-loading conveyor, and said cargo supplying means;
said robot chucking said cargoes for the one line fed by said cargo supplying means, loading said cargoes treating the one end side on said pallet being in the front of said robot as a first line, thereafter said robot conducting loading operations for said cargoes in a first stage by loading said cargoes from said first line to a last line, dislocating the cargo-loading positions per those in one line to the direction separating from said first line, thereafter said robot loading said cargoes in a plurality of stages on said pallet, repeating the above cargo-loading operations in the same way.

3. A cargo-loading apparatus as claimed in claim 2, wherein said cargoes are the same in dimension, and cargo-loading plane patterns in each of a plurality of stages are the same viewing from the above by feeding said cargoes in patterns of combination of a plurality of cargoes constituting one line viewing from the above are the same.

4. A cargo-loading apparatus as claimed in claim 2 or 3, wherein said cargoes in each of the stages of the odd number and of the even number have the same cargo-loading plane patterns viewing from the above, and said cargo-loading plane patterns of the cargoes in the even number stages are nominally the patterns rotated at 90° or 180° against said cargo-loading plane patterns of the cargoes in the odd number stages.

5. A cargo-loading apparatus according to claim 2, 3, or 4 wherein said cargo supplying means comprises a cargo supplying line (63, 65) for one line or a plurality of lines, direction converting means (64) for converting the directions of said cargoes on the cargo supplying line, and a cargo arrangement means (66) for arranging a plurality of cargoes so that their combining patterns viewing from the above can be in a different state at least for those of one line per stage from those for other lines.
